# EUROPEAN PATENT APPLICATION

(11) **EP 3 029 350 A1**
(43) Date of publication of application: **08.06.2016**
(21) Application number: 15197616.4
(22) Date of filing: 02.12.2015
(51) Int. Cl.: F16F 9/46, B62K 25/04

(54) **VALVE ASSEMBLY FOR BICYCLE SUSPENSION SYSTEM**

(30) Priority: 02.12.2014 US 201462086370 P
(71) Applicant: Cycling Sports Group, Inc., CT 06851 (US)
(72) Inventor: Ebersbach, Wolfgang, 79714 Heuweiler (DE); Pelot, Sante, 79102 Freiburg (DE); Dodman, Christopher Philip, Bottmingen BL, 4103 (CH)
(74) Representative: Harris, Oliver John Richard

(57) **Abstract**

A valve assembly (420) for a bicycle suspension system includes a housing (421), a rotary valve (422) disposed within the housing (421), and a rotational electro mechanical actuator (424) disposed within the housing (421). The housing (421) is configured to house shock absorber fluid. The rotational electro mechanical actuator (424) is disposed in operable communication with the rotary valve (422). The housing (421), the rotary valve (422) and the rotational electro mechanical actuator (424) define a plurality of fluid flow passages internal to the housing. The rotary valve (422) and the rotational electro mechanical actuator (424) are each subject to contact with or immersion in the shock absorber fluid in the housing (421) when present.

## Description

### CROSS REFERENCE TO RELATED APPLICATIONS

This application claims the benefit of U.S. Provisional Application Serial No. 62/086,370 filed December 2, 2014, which is incorporated herein by reference in its entirety.

### BACKGROUND OF THE INVENTION

The present disclosure relates generally to a valve assembly for a suspension system of a bicycle, particularly to a valve assembly having a lock-out valve, and more particularly to a valve assembly having a rotary actuated lock-out valve.

A known bicycle suspension system is disclosed, for example, in US 8,459,418.

While existing suspension systems for a bicycle may be suitable for their intended purpose, the art of bicycle suspensions systems, however, would be advanced by use of a rotary actuated lock-out valve as herein disclosed.

This background information is provided to reveal information believed by the applicant to be of possible relevance to the present invention. No admission is necessarily intended, nor should be construed, that any of the preceding information constitutes prior art against the present invention.

### BRIEF DESCRIPTION OF THE INVENTION

In an embodiment of the invention, a valve assembly for a bicycle suspension system includes a housing, a rotary valve disposed within the housing, and a rotational electro mechanical actuator (REMA) disposed within the housing. The housing is configured to house shock absorber fluid. The REMA is disposed in operable communication with the rotary valve. The housing, the rotary valve and the REMA define a plurality of fluid flow passages internal to the housing. The rotary valve and the REMA are each subject to contact with or immersion in the shock absorber fluid in the housing.

The above features and advantages and other features and advantages of the invention are readily apparent from the following detailed description of the invention when taken in connection with the accompanying drawings.

### BRIEF DESCRIPTION OF THE DRAWINGS

Referring to the non-limiting drawings wherein like elements are numbered alike in the accompanying Figures:
FIG. 1 depicts an embodiment of a bicycle in accordance with an embodiment of the invention;
FIG. 2 depicts a bicycle frame depicted in FIG. 1 in accordance with an embodiment of the invention;
FIG. 3 depicts the bicycle frame of FIGS. 1 and 2 with a portion of a front top tube cut away to illustrate placement of portions of a rear shock absorber in accordance with an embodiment of the invention;
FIG. 4 depicts the rear shock of FIG. 3 in more detail and in accordance with an embodiment of the invention;
FIG. 5 depicts a more detailed view of a valve assembly depicted in FIG. 4 disposed in fluid communication with a "short" reservoir in accordance with an embodiment of the invention;
FIG. 6 depicts in block diagram cross section view an inner portion of a rotary spool valve assembly disposed within a housing of the valve assembly depicted in FIG. 5 in accordance with an embodiment of the invention;
FIG. 7 depicts in block diagram view an embodiment of the rear shock absorber depicted in FIGS. 2-5 with various details denoted in accordance with an embodiment of the invention;
FIG. 8 depicts Detail-8 as denoted in FIG. 7 in accordance with an embodiment of the invention;
FIG. 9 depicts Detail-9 as denoted in FIGS. 7 and 8 in accordance with an embodiment of the invention;
FIG. 10 depicts Detail-10 as denoted in FIGS. 7 and 8 in accordance with an embodiment of the invention;
FIG. 11 depicts Detail-11 as denoted in FIG. 7, with flow lines depicted, in accordance with an embodiment of the invention;
FIG. 12 depicts Detail-12 as denoted in FIG. 7, with flow lines depicted, in accordance with an embodiment of the invention;
FIG. 13 depicts Detail-13 as denoted in FIG. 7, with flow line depicted, in accordance with an embodiment of the invention;
FIG. 14 depicts Detail-14 as denoted in FIG. 7, with flow lines depicted, in accordance with an embodiment of the invention;
FIG. 15 depicts the embodiment of the rotary valve assembly of FIG. 5 with fluid flow lines depicted for three different states of damping fluid flow in accordance with an embodiment of the invention;
FIG. 16 depicts another view of the flow of damping fluid in various states of flow through the rotary valve assembly in accordance with an embodiment of the invention;
FIG. 17 depicts a portion of the bicycle depicted in FIG. 1 employing two valve assemblies in accordance with an embodiment of the invention;
FIG. 18 depicts a schematic of a control system for use with the bicycle of FIG. 1 in accordance with an embodiment of the invention;
FIG. 19 depicts Detail-19 as denoted in FIG. 7, and depicts conceptually where another rotary electro-mechanical actuator may be employed, in accordance with an embodiment of the invention;
FIG. 20 depicts Detail-20 as denoted in FIG. 7, and depicts conceptually where another rotary electro-mechanical actuator may be employed, in accordance with an embodiment of the invention;
FIG. 21 depicts Detail-21 as denoted in FIG. 7, and depicts an embodiment of the shock absorber of FIG. 3 having a pressure sensitive valve disposed on the dynamic piston of the shock absorber in accordance with an embodiment of the invention.

### DETAILED DESCRIPTION OF THE INVENTION

Although the following detailed description contains many specifics for the purposes of illustration, anyone of ordinary skill in the art will appreciate that many variations and alterations to the following details are within the scope of the invention. Accordingly, the following embodiments of the invention are set forth without any loss of generality to, and without imposing limitations upon, the claimed invention.

In an embodiment, a bi-stable rotary actuated valve assembly (valve assembly) in combination with an oil reservoir is fluidly connected via a flexible hose to a bicycle shock absorber unit. The ebb and flow of oil between the bicycle shock absorber unit and the oil reservoir is controlled by the valve assembly. The valve assembly includes: a housing that contains both a bi-stable REMA, and a rotary valve. The bi-stable REMA is an electromechanical unit having a magnet and electrical windings. The rotary valve is rotatable between open and closed positions via the bi-stable REMA (which receives operational signals via sensors on the bicycle). As the oil ebbs and flows in the shock absorbing system of the bicycle, it flows within the housing of the valve assembly through internal fluid flow ports, channels or paths, and through and around the electromechanical parts of the bi-stable REMA (that is, the bi-stable REMA, in addition to the rotary valve, is subject to contact with or immersion in the shock absorber oil in the housing of the valve assembly). The rotary valve is lockable in a closed position to provide for a stiff suspension to prevent bicycle "bobbing", and lockable in an open position to provide dampened suspension to provide a smooth ride over rough terrain.

While embodiments are described herein with reference to a REMA, it will be appreciated that a plurality of REMAs may be employed for separate control functions, such as damping rebound control, low-speed damping compression control, and damping lock-out control, for example, which are discussed in more detail below. In an embodiment where a plurality of REMAs are employed, multiple valves are employed in a one-to-one relationship with the REMAs, where some of the REMAs may be servo or stepper motors that actuate an adjuster to a new fixed position. For example, to adjust for fade, instantaneous adjustment is not required, so a controller could sample every 10 seconds or so, and then facilitate movement of the adjuster to a new position if the temperature of the hydraulic fluid exceeds a certain threshold. Multiple REMAs are discussed in more detail below in connection with FIGS. 23, 25 and 26.

While embodiments are described herein with reference to a bi-stable rotary solenoid, it will be appreciated that a REMA capable of proportional control could also be employed. Examples of this type of REMA would be a stepper motor, servo motor, rotary voice coil, Galvo motor, or proportional rotary solenoid.

While embodiments described herein depict bicycles suitable for mountain bike type applications, it will be appreciated that the disclosed invention is also applicable to other bicycle frame types, such as but not limited to commuter style bicycles , road bikes, e-bikes, or BMX style bicycles, for example. As such, the scope of the invention is not limited to only the bicycle frame embodiments disclosed herein, but encompass all bicycle frame types that fall within the ambit of the invention disclosed herein. It is also contemplated that the disclosed invention may also be usable on other types of vehicles. As such, the scope of the invention is not limited to bicycle use, but encompasses all vehicle uses that fall within the ambit of the invention disclosed herein.

In an embodiment, the bi-stable REMA (also herein referred to as an "actuator") actuates a rotary valve immersed inside the oil of the shock absorber (also herein referred to as a "hydraulic damper unit") to either allow flow or prohibit flow. The rotary valve is also herein referred to as a "lock-out valve". In an embodiment, the lock-out valve rotates 45 degrees between open and closed positions, but may be configured to rotate through a different angle that is suitable for a purpose disclosed herein. The bi-stable REMA does not need power to maintain its position in the open and closed positions, substantially reducing power consumption compared to other types of actuators. By having the rotary valve immersed in the oil, it is not necessary to use a rubber dynamic seal between the rotary valve and the housing of the valve assembly, which would introduce a frictional load to the system that would slow down the response time of the REMA and increase power consumption. In contrast, a static seal between the actuator power supply wires and the housing of the valve assembly will not influence speed or power consumption of the REMA.

In an embodiment, the open-close/close-open response time is such that the lockout valve opens allowing hydraulic fluid to begin to flow before a rider can perceive that a bump was encountered. A fast reaction time enables the actuator to open the lockout valve before the hydraulic fluid pressure and flow become too large. In an embodiment, the actuator is strong enough so that it can operate up to a point that a blow off valve opens.

The valve assembly includes a compression damping assembly that is small enough so that power supply wires to the actuator may pass around the outside of the compression damping assembly. The off-set electrical connection to the actuator prevents the compression damping assembly from having to be rotationally aligned (or "clocked") to the actuator, which would allow the wires to pass through the compression assembly. The off-set wires also negate the need to seal the wires from the compression damping assembly as the wires go around the compression damping assembly, not through the compression damping assembly.

In an embodiment, a microprocessor based controller disposed locally on the bicycle is disposed in signal communication with the various sensors and the bi-stable rotary actuated valve assembly to rapidly change the state of the rotary lock-out valve via the REMA depending on movements of the bicycle. In an embodiment, the microprocessor based controller comprises one or more microprocessors. In another embodiment, the microprocessor based controller comprises more than one microprocessor.

Use of an electro-mechanical control allows features of the bicycle to be performed with software, executable by the one or more of the microprocessors, that a user could activate or deactivate to adjust such features using the software. In particular, electro-mechanical control of low-speed compression, high-speed compression, low-speed rebound, high-speed rebound, and lock-out blow-off threshold can be used in a variety of combinations to provide improved ride control, such as for example, brake-dive control. Using various sensors including, but not limited to, accelerometers and a brake-activation sensors, it is possible to increase the low-speed compression damping in the fork and the low-speed rebound in the shock. In this way the weight-transfer to the front of the vehicle that occurs during braking can be reduced. A multi-position REMA may also be used for low speed damping control that provides proportional control of the valve to position the valve in one of a plurality of partially open/closed positions for providing a range of damping characteristics from soft to firm. In an embodiment, the REMA is a solenoid. In another embodiment, the REMA is a stepper motor.

In an embodiment, a temperature sensor is employed to measure the temperature of the hydraulic oil, which enables compensating for damping based on the temperature. Hydraulic fluid is very sensitive to temperature that may result in "fade" (reduced damping as the hydraulic fluid temperature increases), which is difficult to control with mechanical means. In an embodiment, fade is compensated for by measuring the temperature of the damping unit and adjusting the low-speed compression and low-speed rebound to give more consistent performance. Another manner of fade compensation is to adjust the front and rear gas springs as a function of temperature of the gas springs. By measuring the temperature of each gas spring, an air volume within the respective spring can be changed to adjust the behavior of the spring, or to transfer gas to a different chamber to accomplish the same. It will also be appreciated that changes in ambient temperature also have an effect on bicycle performance. As such, the same temperature sensors and adjustments could be employed to deal with ambient temperature changes. Other sensors, such as an air pressure sensor for example, may be employed to provide damping adjustment based on a change in air pressure of the air spring suspension unit.

In an embodiment, one or more of the above noted sensors are used to provide feedback regarding the state of the rider, such as standing up and sprinting versus seated pedaling. It can be appreciated that during seated pedaling, traction and comfort are both important, in addition to riding efficiency. In this situation it is desirable to have a "medium" amount of low-speed damping, but not necessarily locked out. However, during sprinting, it is desirable to have the suspension locked out as body motions tend to be exaggerated, which causes the bicycle to "bob" if the suspension is not locked out. Moreover, when the user is standing on the pedals, it is easier for the rider to adjust body positioning to move weight where it is needed for traction, or to absorb bumps using the body, so it is typically not necessary for the suspension to be soft in this instance.

In an embodiment, a bike speed sensor is employed that permits the actuation speed/mode of the valve assembly to be adjusted relative to bike speed for electric power consumption savings/economy, according to a defined algorithm executed by the controller.

In an embodiment, a bike inclination sensor is employed that permits the actuation speed/mode of the valve assembly to be adjusted relative to bike inclination for electric power consumption savings/economy, according to a defined algorithm executed by the controller. For example, uphill travel means relatively lower weight on the front wheel, so the valve assembly could be adjusted for lower power and speed of actuation. Downhill travel means relatively higher weight on the front wheel, so the valve assembly could be adjusted for higher power and speed of actuation. In an embodiment, a free-fall sensor is employed for detecting when the bike is jumping, so the valve assembly could be adjusted during a free-fall event for providing maximum speed of unlock with full power to the valve assembly. As used herein, a free-fall sensor (FFS) is an accelerometer used to detect if a bicycle is freely falling. The controller responsive to signals from the FFS can then apply appropriate adjustments to the damping characteristics of the shock absorber to absorb the shock of a sudden impending impact.

In an embodiment, a pressure sensor, weight sensor or strain gage sensor is employed and strategically disposed on the bicycle to sense the weight of a rider in a static and/or dynamic mode. In an embodiment, the controller is configured to be responsive to signals from the pressure/weight/strain gage sensor to adjust the damping characteristic of the suspension system according to a defined algorithm based on the rider's weight and/or riding dynamics.

In an embodiment, a pressure sensor, weight sensor or strain gage sensor is employed and strategically disposed on the bicycle to sense whether the rider is seated or standing on the pedals.

In an embodiment, a pressure sensor, weight sensor or strain gage sensor is employed and strategically disposed on the bicycle to sense whether the rider is pedaling or coasting.

In an embodiment, a brain sensor, or other brain sensing technology, is used to determine what the rider wants the shock absorber (damper) to do, and provides a signal to the controller that adjusts shock absorber accordingly. For example, the controller could be programmed to respond to a signal from the brain sensor that indicates that the user wants the valve to open.

In an embodiment, the brain sensor is integrated into the rider's helmet.

In an embodiment, the responsiveness of the suspension system, and more particularly the bi-stable rotary actuated valve assembly, is automatic absent any electronically controlled user interface, where the on-off state of the valve assembly is based on movement of the bicycle measured by at least one acceleration sensor. In an embodiment, if the bicycle is left inactive for more than a defined length of time, such as ten minutes for example, then the controller goes into sleep mode. In an embodiment, the controller is wireless enabled so that a user can adjust the sensitivity of lock timeout, or any other adjustable control setting, via a mobile phone app, or other wireless communication means. Other control algorithms may be implemented using the mobile phone app, or using an optional remote wireless user interface on a handlebar grip. A communication device such as a beeper or a multicolor LED may be included on the bicycle to communicate controller function and battery status.

Details of example embodiments will now be described with reference to the several figures provided herewith.

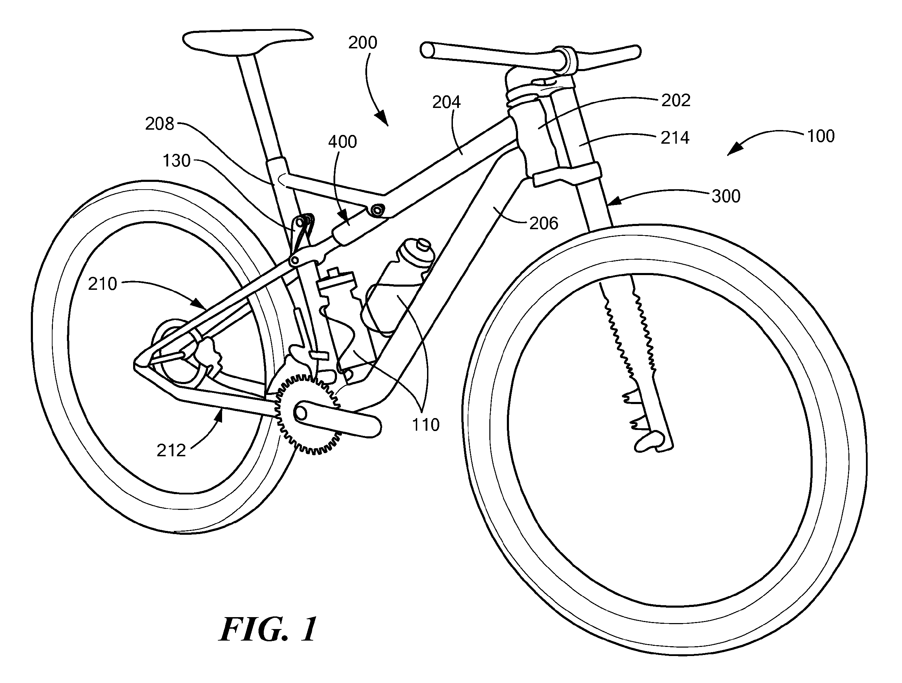

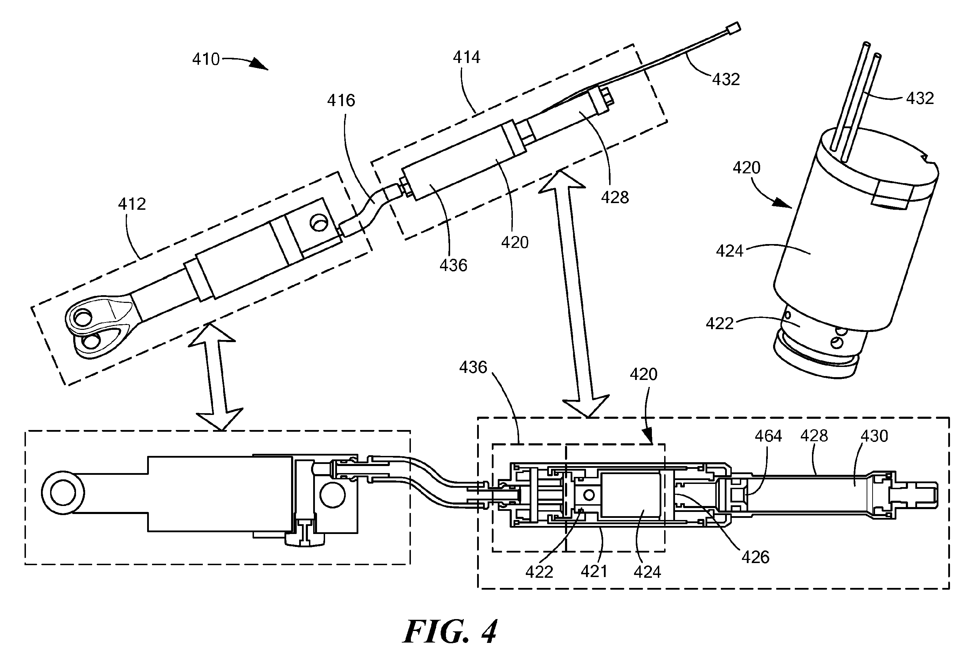

FIG. 1 depicts an embodiment of a bicycle 100, such as a mountain bike for example, having a frame 200 that includes a front suspension system 300 and a rear suspension system 400. The rear suspension system 400 has a split shock format, also herein referred to as a split rear shock 410 (best seen with reference to FIG. 4). From the teachings herein, however, it will also be appreciated that the split shock format can also be implemented on the front suspension system 300. In general, the frame members 200 include a head tube 202, a top tube 204, a down tube 206, a seat tube 208, seat stay tubes 210, and chain stay tubes 212, but it will be appreciated that other frame member configurations may be employed that could benefit from an embodiment of the invention disclosed herein. In the illustrated embodiment of FIG. 1, and pivotally coupled to the head tube 202, is a lefty front tube 214. Alternatively, front fork tubes may be used in place of the lefty front tube 214.

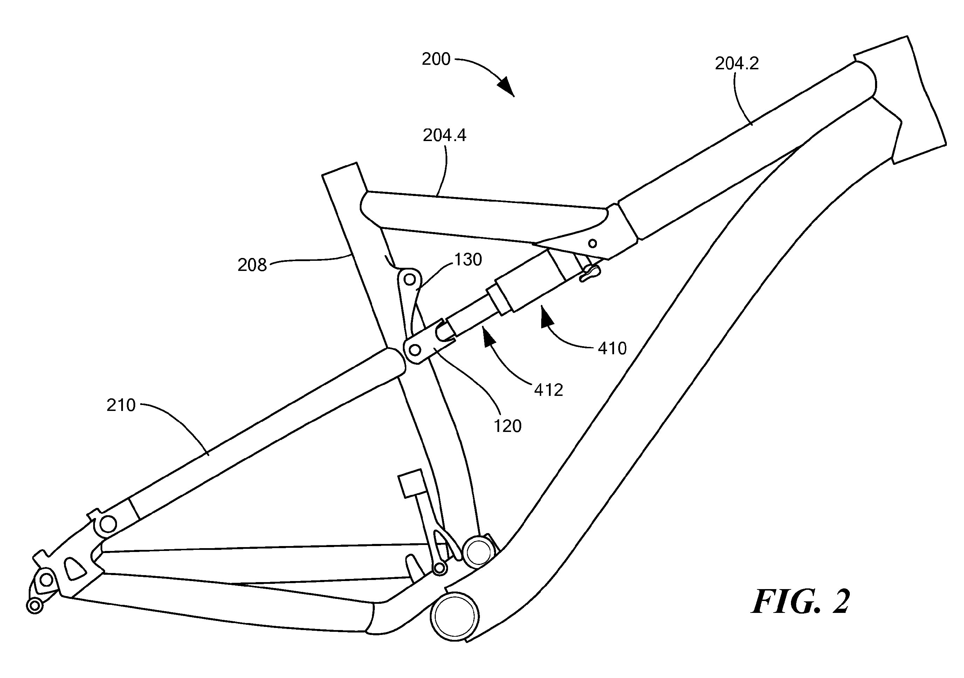

FIG. 2 depicts the bicycle frame 200 of FIG. 1 having the split rear shock 410 installed therein, where the top tube 204 has a front top tube 204.2 and a rear top tube 204.4.

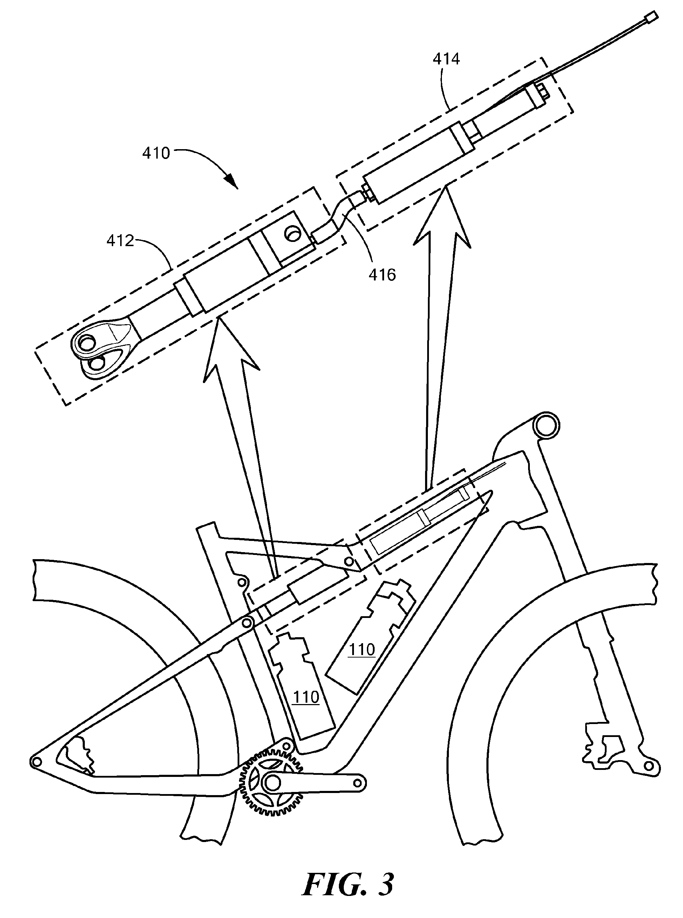

FIG. 3 depicts the bicycle frame 200 of FIGS. 1 and 2 with a portion of the front top tube 204.2 cut away to illustrate placement of portions of the split rear shock 410 within the top tube 204. In an embodiment, the split rear shock 410 has a first portion 412 disposed external of the top tube 204, and a second portion 414 disposed internal to the top tube 204, and more specifically in an embodiment disposed internal of the front top tube 204.2. In an embodiment, the second portion 414 of the split rear shock 410 is fully integrated into the front top tube 204.2 of the frame 200, and disposed in line with the first portion 412 of the split rear shock 410 to provide an uncluttered aesthetic appearance. Further as depicted in FIGS. 1-3, the split rear shock 410 is disposed in line with the seat stay tubes 210, with the first portion 412 being coupled to the seat stay tubes 210 via a coupling 120, which in turn is coupled to the seat tube 208 via a pivotable swing arm 130.

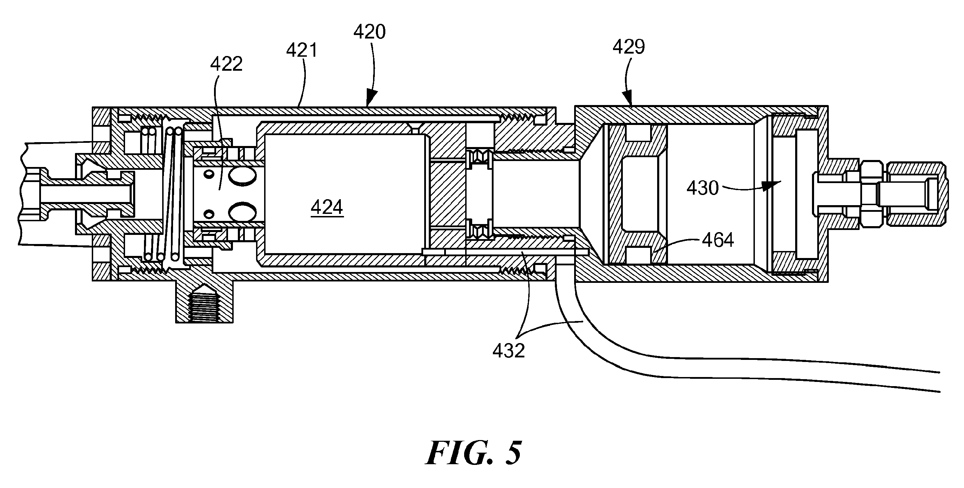

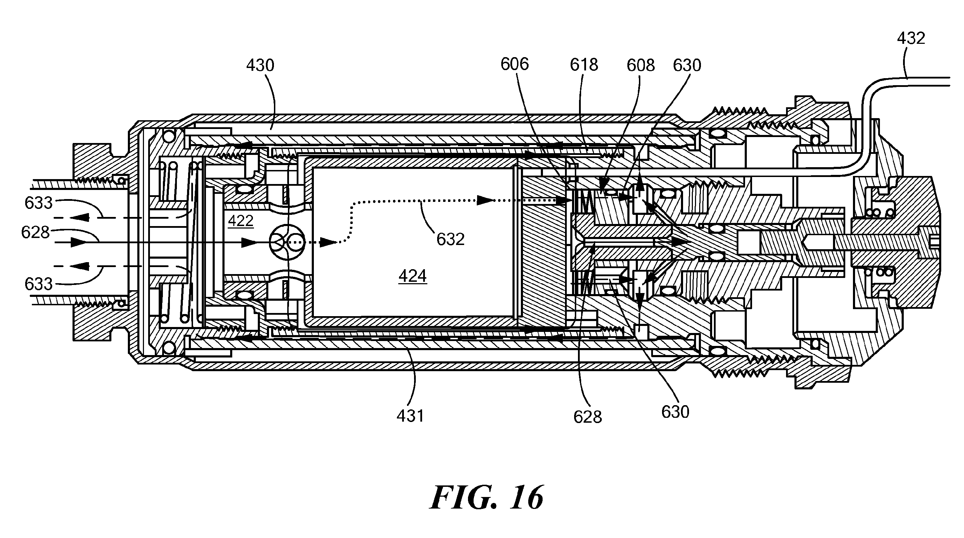

FIG. 4 depicts the split rear shock 410 in more detail. In an embodiment, a valve assembly 420 includes a rotary lock-out valve 422, a bi-stable REMA 424, and an optional blow-off valve 426, and is disposed in fluid communication with a damping fluid reservoir 428. A compressible air chamber 430 within the reservoir unit 428 accommodates ebb and flow of shock absorbing fluid. In an embodiment, the compressible air chamber 430 is disposed in the housing of the reservoir 428 and has an internal floating piston (IFP) 464 that separates the hydraulic chamber (left side of piston 464) from the air chamber (right side of piston 464) in a manner known in the art. The reservoir may be a "long" reservoir 428 as depicted in FIG. 4, or a "short" reservoir 429 as depicted in FIG. 5. The two reservoirs function in similar ways, with the selection of one over the other being a matter of design choice. In another embodiment, which is discussed in more detail below in connection with FIG. 16, the compressible air chamber 430 is formed by a bladder (alternatively a flexible element, a deformable membrane, or a foam compensator, for example) 431 (best seen with reference to FIG. 16) that surrounds the valve assembly 420 internal of the valve housing 421. Electrical wires 432 connect to the REMA 424, sensors, such as one or more accelerometers, and a power supply, disposed on or within the frame 200, for actuation thereof, which are discussed further below.

In the embodiment depicted in FIG. 4 the first and second portions 412, 414 of the split rear shock 410 are coupled in fluid communication with each other via a flexible hose 416. While the term flexible hose is used herein, it will be appreciated that a rigid or semi-rigid fluid coupling may also be employed without detracting from the scope of the invention.

Alternatively, a second tube (not shown), commonly referred to as a twin-tube arrangement, disposed either co-axially with or separated from the flexible hose or rigid tube, may be employed. In an embodiment, the second tube is rigid and arranged coaxially around the first rigid tube. Each tube flows oil in both directions (compression and rebound). In an embodiment, the first tube has a damping piston, usually but not necessarily solid, and may also contain high-speed or lock-out blow-off shims, and/or a rebound adjuster. The second tube routes fluid from the damping assembly (usually compression, rebound damping, and possibly lock-out occur in this damping assembly, but it could just be compression damping or compression damping and rebound) at a first end of the first tube to the second end of the first tube for a compression event (unless it is a "pull-shock," then it is reversed). In a rebound event the second tube routes fluid from the second end of the first tube, to the damping assembly, and back into the first end of the first tube (unless it is a "pull-shock," then it is reversed). Those skilled in the art commonly refer to this as a twin-tube damper.

FIG. 5 depicts a more detailed view of the valve assembly 420 of FIG. 4 disposed in fluid communication with a "short" reservoir 429. The electrical wires 432 of the valve assembly 420 are axially offset to seal against one mating part (which is clocked relative to other parts of the assembly), and exit the housing 421. This allows a central flow-path along a common assembly axis to be free for any number of parts which don't require clocking or sealing against the wires. However, it will be appreciated that offsetting the assembly axis by a small amount still falls within the scope of the invention disclosed herein. The offset wires 432 also permit a common valve to be used for front or rear suspensions. In an embodiment, the bi-stable REMA 424 is immersed inside the oil that is inside the housing 421 of the valve assembly 420, which is part of the split rear shock 410, to either allow flow or prohibit flow of damping fluid, hence the term bi-stable, by actuating the lock-out valve 422 between at least an open and a closed position.

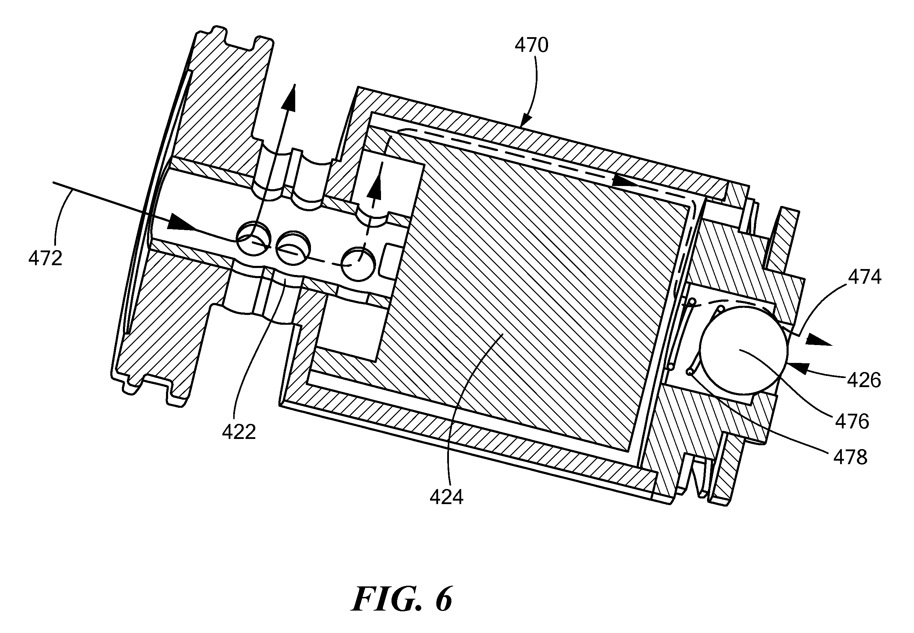

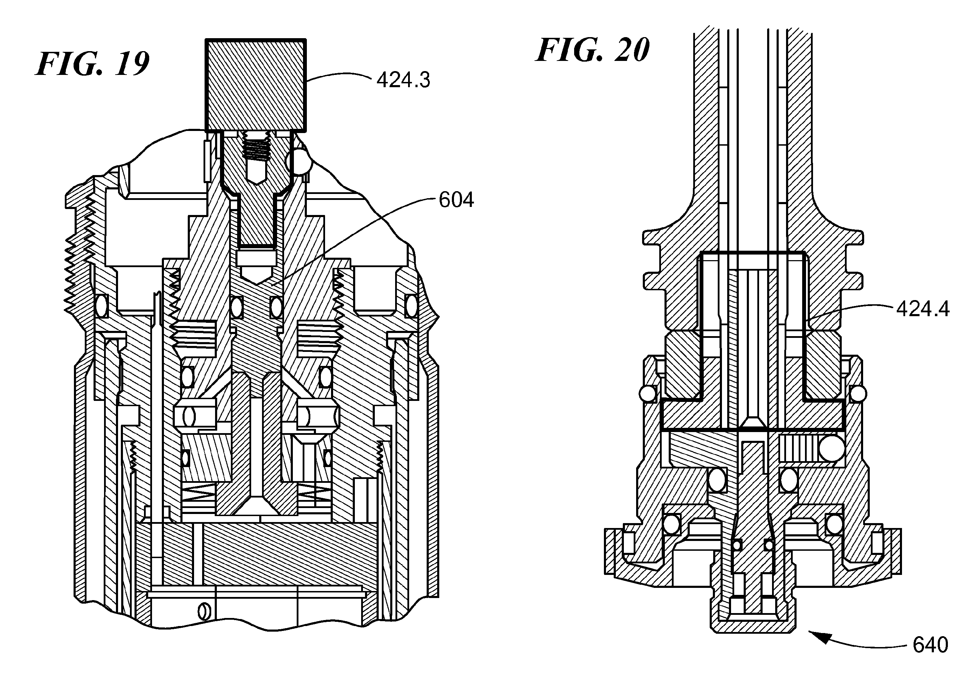

FIG. 6 depicts in block diagram cross section view an inner portion 470 of an example rotary spool valve assembly 420 that is contained within the valve housing 421. The portion 470 depicted in FIG. 6 is shown with the valve 422 in an open position to allow hydraulic fluid to flow from the shock absorber through the valve 422 during a damping action, as depicted by solid flow line 472. In an embodiment, a blow-off check valve 426 in the form of a ball bearing 476 and spring 478 permits hydraulic fluid to flow through the REMA 424 when the lock-out valve 422 is closed (opposite to that shown in FIG. 6) and the blow-off valve 426 is checked open (i.e., an external forces against the ball bearing 476 opposes the force of spring 478 to open the blow-off valve 426) as depicted by dashed flow line 474 (discussed further below with reference to FIGS. 19 and 20).

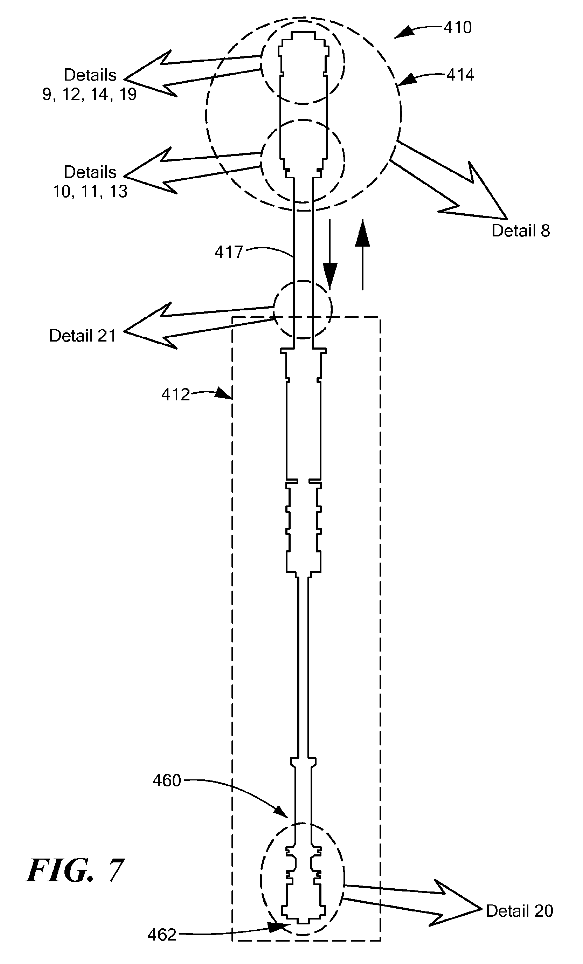

Other aspects and features of the split shock 410 with the rotary actuated valve 420 will now be described with reference to FIGS. 7-14, which depict compression adjustment features as opposed to an IFP. In general, but not exclusively, compression adjustment features are typically employed on a front fork shock absorber system, while an IFP is typically employed on a rear shock absorber system.

FIG. 7 depicts in block diagram view an embodiment of the split shock 410 similar to that of FIGS. 2-5 including the first outer portion 412 (also herein referred to as a hydraulic damping unit, shock absorber, or shock), the second inner portion 414 (also herein referred to as a valve/reservoir unit, or a compression/valve unit), and a rigid tube 417 in place of a flexible hose 416 that allows hydraulic fluid to transfer between the rebound/mid-valve assembly 412 and the compression/valve unit 414.

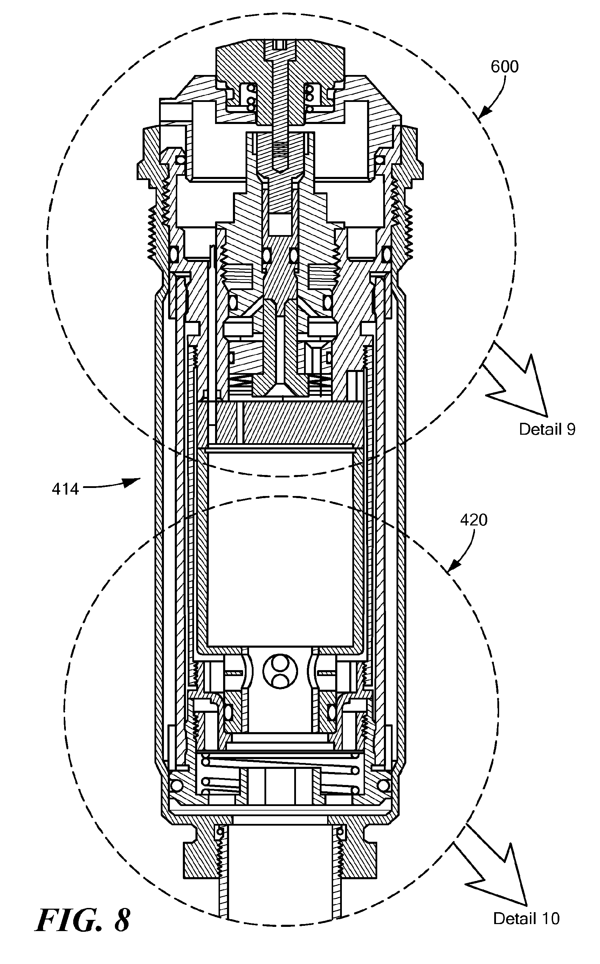

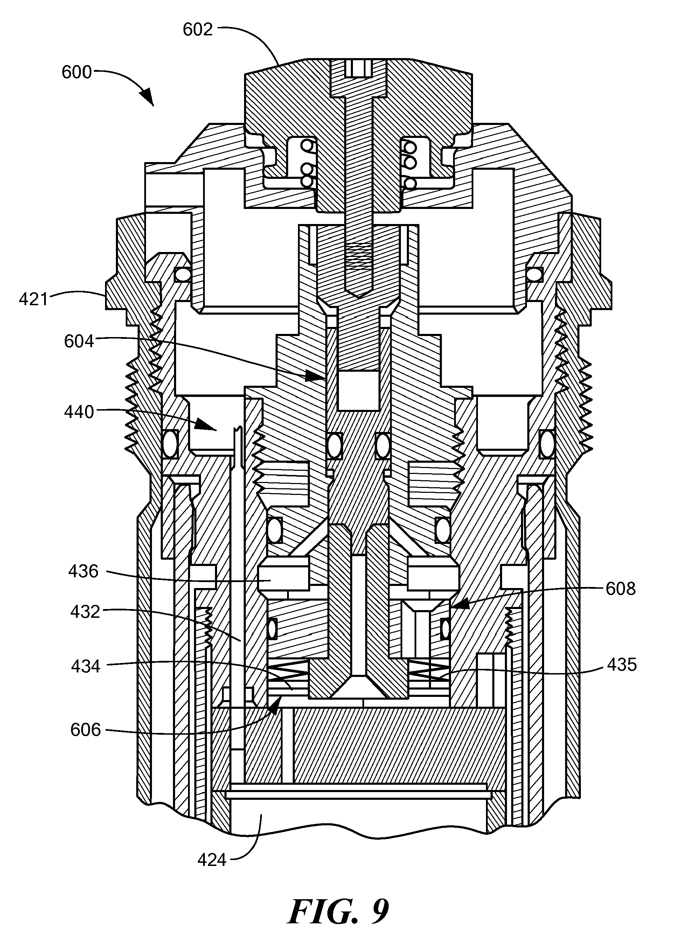

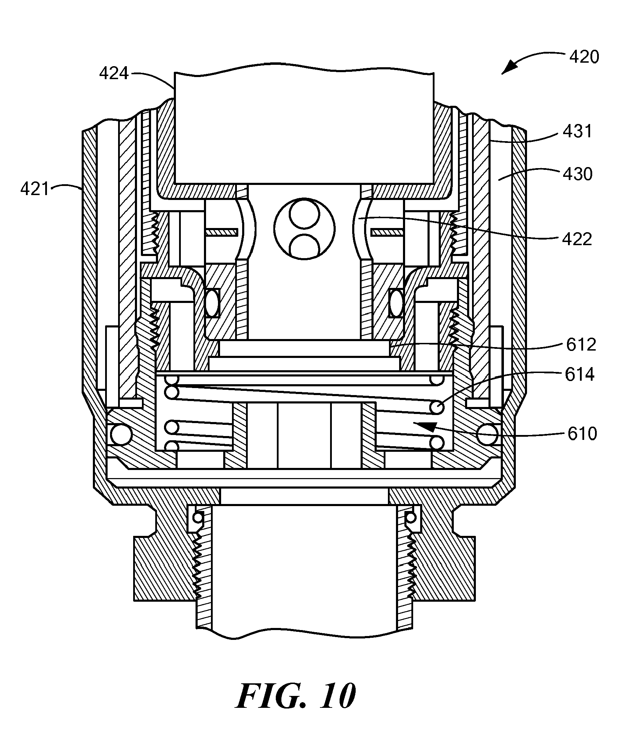

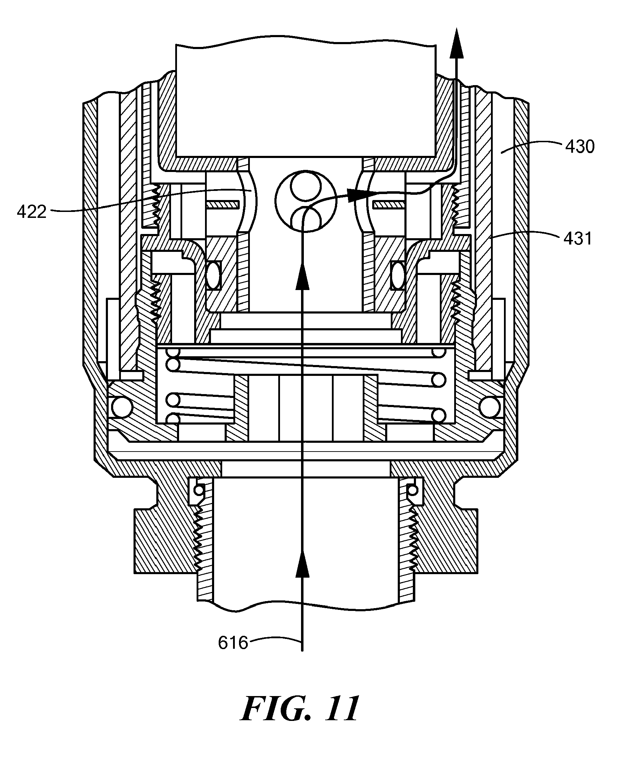

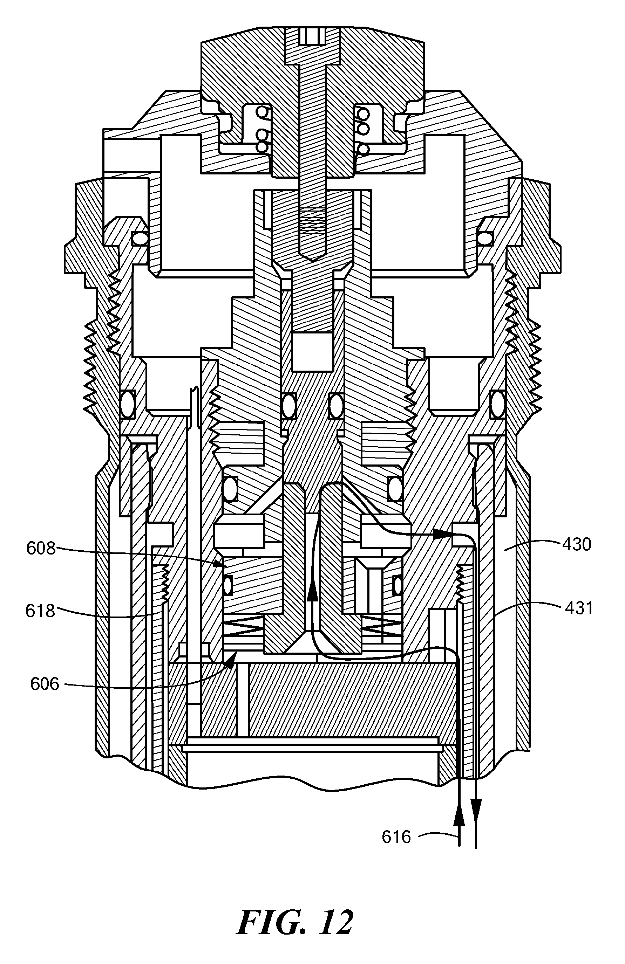

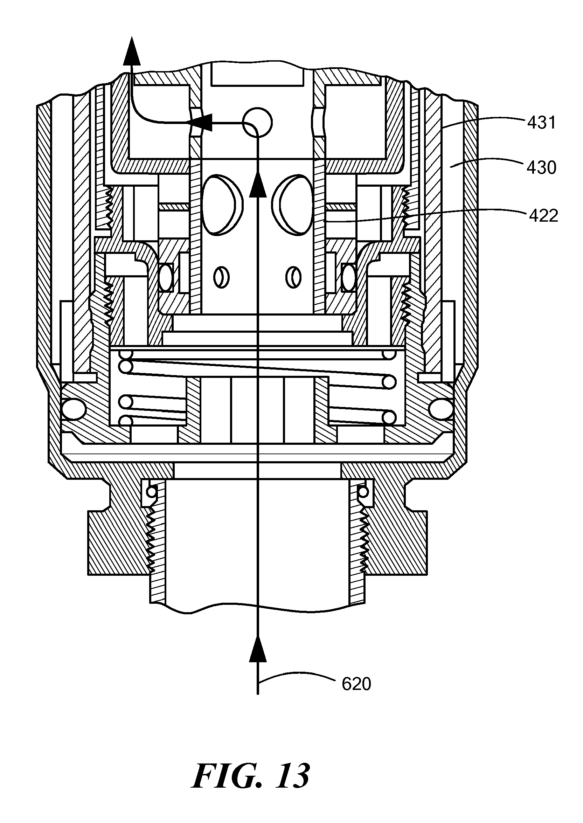

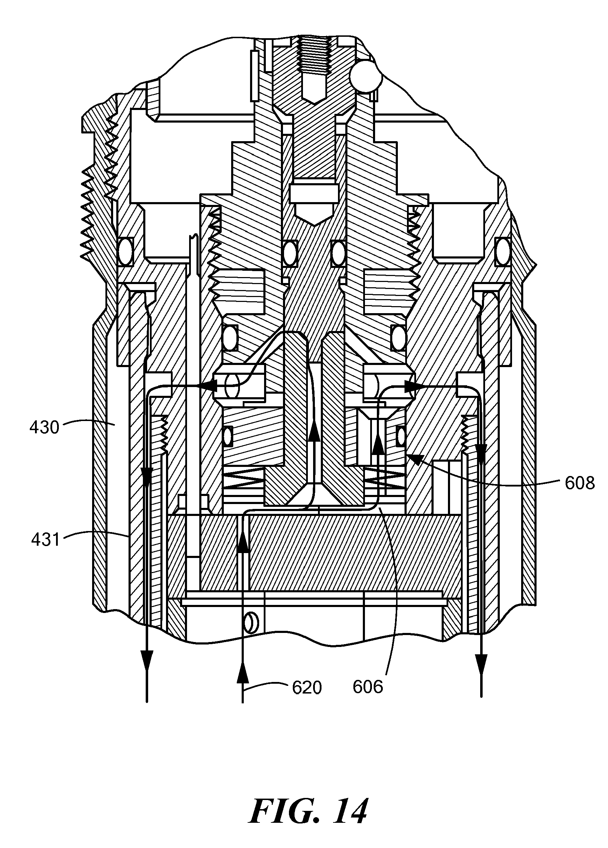

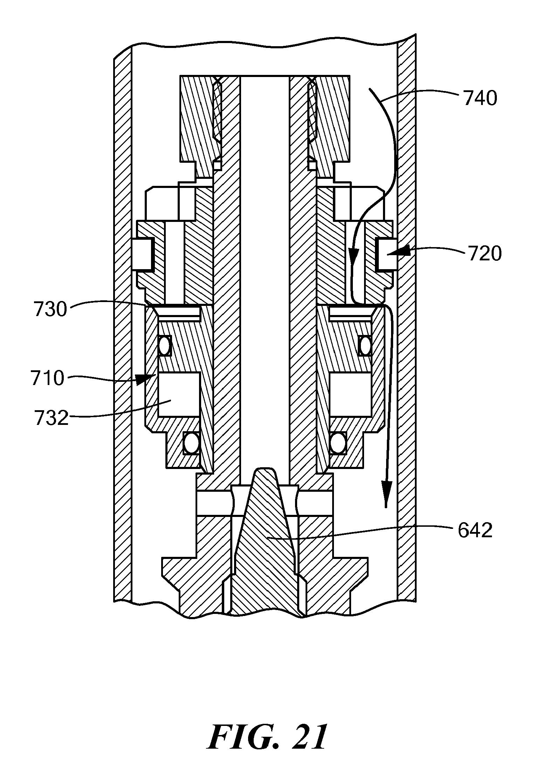

Various details of the split shock 410 are illustrated in expanded views in FIGS. 8-14 and 19-21, where FIG. 8 illustrates Detail 8 in expanded view, FIG. 9 illustrates Detail 9 in expanded view, FIG. 10 illustrates Detail 10 in expanded view, FIG. 11 illustrates Detail 11 in expanded view, FIG. 12 illustrates Detail 12 in expanded view, FIG. 13 illustrates Detail 13 in expanded view, FIG. 14 illustrates Detail 14 in expanded view, FIG. 19 illustrates Detail 19 in expanded view, FIG. 20 illustrates Detail 20 in expanded view, and FIG. 21 illustrates Detail 21 in expanded view. In an embodiment, the shock (first outer portion) 412 incorporates an air spring (+ve/-ve chambers) and a rebound damping circuit, referred to generally by reference number 460, and a rebound damping and air pressure adjustment 462.

FIG. 8 depicts an expanded view of an embodiment of the compression/valve unit 414 having the rotary valve assembly 420 and the compression damping valve assembly 600, which are discussed separately below with reference to FIGS. 9 and 10, respectively;

FIG. 9 depicts an expanded view of an embodiment of the compression damping valve assembly 600. A low speed compression knob 602 is threadably engaged with a low speed compression needle assembly 604 for adjusting low speed compression response of the shock 410. The electrical wires 432 from the REMA 424 pass through internal channels of the compression damping valve assembly 600, around internal components 440, such as a pressure-relief 606 (or blow-off valve, as it is commonly referred to regarding a mountain bike suspension) that includes a blow-off plate 434 and blow-off spring 435, a base valve 608, and a high speed compression shim stack 436 that serves as a compression damping valve, and exit the housing 421 as depicted in FIG. 5 (wires 432 depicted cut-off in FIG. 9).

FIG. 10 depicts an expanded view of the valve assembly 420 having the lock-out valve 422 connected to and actuatable by the REMA 424 and contained within the housing 421. A compression check valve 610 includes a compression check shim 612 that are biased by a compression check spring 614. In an embodiment, and as mentioned above, a compressible air chamber 430 is formed by the bladder 431 having end portions sealably disposed within the housing 421, the function of which, along with the damping fluid flow paths under various operating conditions, will now be described with reference to FIGS. 11-14.

Reference is now made to FIGS. 11 and 12 together, where FIG. 11 depicts a view similar to that of FIG. 10, and FIG. 12 depicts a view similar to that of FIG. 9, but with damping fluid flow lines 616 shown under a condition where the lock-out (L/O) valve 422 open and the blow-off (B/O) valve 606 is closed. In an embodiment, the lock-out valve 422 is arranged such that damping fluid 616 flows first through the lock-out valve 422, then through the base valve 608, and then radially outward to the bladder 431 during a compression stroke. As the damping fluid 616 flows in the annulus formed by the bladder 431 and the assembly wall 618 housing the REMA 424, the bladder 431 expands outwardly into the compressible air chamber 430. The resulting flow allows a "recirculating" flow path within the valve housing, which can address a degree of complication if an IFP and damping adjusters are used. For example, if an IFP and damping adjusters are used, the adjusters would have to pass through the IFP, which would require a dynamic seal. Furthermore, the rebound flow must exit from the same side of the IFP as it entered on a compression event. Thus, the compression check valve would have to move to the crowded space around the compression damping assembly, which further complicates the assembly. Since the bladder 431 is essentially a tube, the damping fluid can be routed downward and the compression check valve can be located near the entry of the valve assembly 420 for providing the "recirculating" flow path, which would provide for a less complicated assembly as the compression adjusters would not need to pass through an IFP.

The bladder 431 is arranged such that it surrounds the valve assembly 420 and the base valve 608. This arrangement allows compression damping adjusters (commonly known as low-speed compression adjusters, high-speed compression adjusters, and lock-out threshold adjusters) to be easily employed such that they do not have to pass through or around the valve 420 or IFP, which greatly reduces complexity. The base valve assembly 608 is made small enough so that the power supply wires 432 to the REMA 424 may pass around the outside of the compression damping valve 436 and other internal components 440. This prevents the base valve 608 from having to be rotationally aligned (or "clocked") to the REMA 424 to allow the wires 432 to pass through the base valve assembly 608, and it also negates the need to seal the wires 432 to the base valve assembly 608. This arrangement also allows the adjusters to be independent of the electronic valve. For example, the adjusters may be configured to rotate relative to a fixed electronic valve. Alternatively, albeit less desirable because of the issue of twisting the electrical wires, the electronic valve itself may be configured to rotate to provide an adjustment feature, if the electronic valve were downstream of the compression assembly.

Reference is now made to FIGS. 13 and 14 together, where FIG. 13 depicts a view similar to that of FIG. 10, and FIG. 14 depicts a view similar to that of FIG. 9, but with damping fluid flow lines 620 shown under a condition where the lock-out valve 422 is closed and the blow-off valve 606 is open. A similar expansion of the bladder 431 occurs as the damping fluid 620 flows into the annulus formed by the bladder 431 and the assembly wall 618 housing the REMA 424. However, under these conditions the fluid flow 620 is around the working components of the REMA 424 (also seen in FIG. 6).

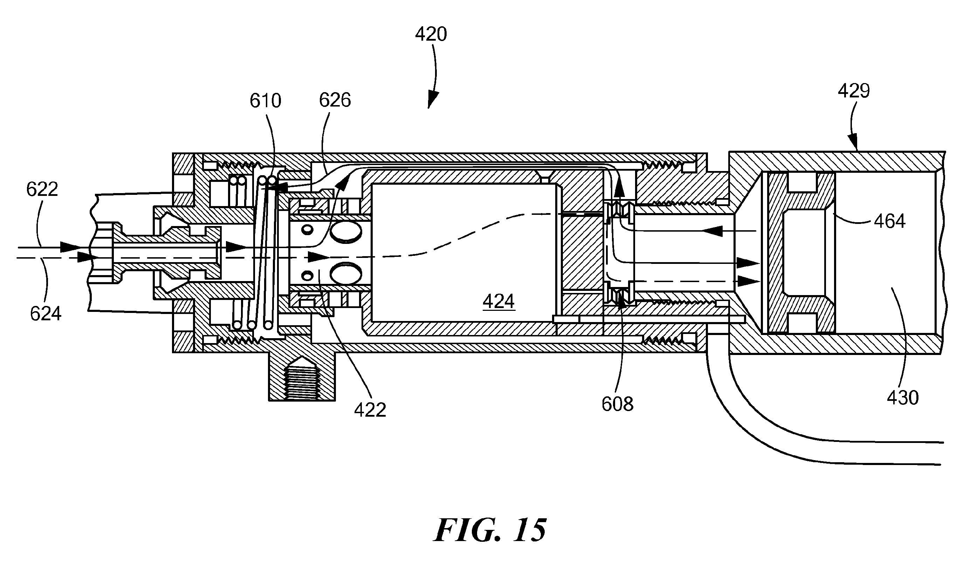

FIG. 15 depicts the embodiment of the rotary valve assembly 420 of FIG. 5 with fluid flow lines illustrated for three different states of damping fluid flow. During a compression state with the lock-out valve 422 open, damping fluid flow follows the left-to-right upper flow path 622 (solid line), where the damping fluid 622 bypasses the REMA 424 (i.e., passes around the outside housing of the REMA 424) to the base valve 608, where it enters the reservoir 429 ("short" reservoir depicted in FIG. 15), resulting in movement of the IFP 464 and compression of the air (gas) in compressible air chamber 430, which is similar to that depicted in FIGS. 11-12 where the compressible air chamber works in conjunction with a compressible bladder as opposed to an IFP. During a compression state with the lock-out valve 422 closed (i.e., locked out), damping fluid flow follows the left-to-right lower flow path 624 (dashed line), where the damping fluid 624 passes through the REMA 424 to the base valve 608, again resulting in movement of the IFP 464 and compression of the air (gas) in compressible air chamber 430, which is similar to that depicted in FIGS. 13-14 where the compressible air chamber works in conjunction with a deformable bladder as opposed to an IFP. During a rebound state, damping fluid flow follows the right-to-left upper flow path 626 (solid line), where the damping fluid 626 flows through fluid channels around the outside housing of the REMA 424 back through the compression check valve 610 to the shock (first portion) 412.

Another illustration of the flow of damping fluid is depicted in FIG. 16, which depicts a bladder-type compressible air chamber 430 similar to that depicted in FIGS. 8-14. Here, low-speed compression damping fluid flow with the lock-out valve 422 open follows the left-to-right central path 628 (solid line) that bypasses the REMA 424 and passes through the base valve 608 to the reservoir of the annulus formed by the bladder 431 and the assembly wall 618 housing the REMA 424 (see FIGS. 14-20, for example). High-speed compression damping fluid flow with the lock-out valve 422 open follows the same path 628 up to the blow-off valve 606, which becomes activated under high-speed compression conditions resulting in a secondary flow path 630 (dashed lines) downstream of the REMA 424, which then follows a similar flow path to the reservoir of the annulus formed by the bladder 431 and the assembly wall 618 housing the REMA 424. When the lock-out valve 422 is closed and the shock 410 experiences a high compression load, the damping fluid flows through the REMA 424 and out through the blow-off valve 606 as depicted by the (dotted line) fluid flow path 632. Return rebound flow is depicted by right-to-left (dashed line) flow 633.

In comparing the fluid flow paths of FIGS. 6 and 13-14, it can be seen that under certain conditions the internal components of the REMA 424 are in direct contact with damping fluid.

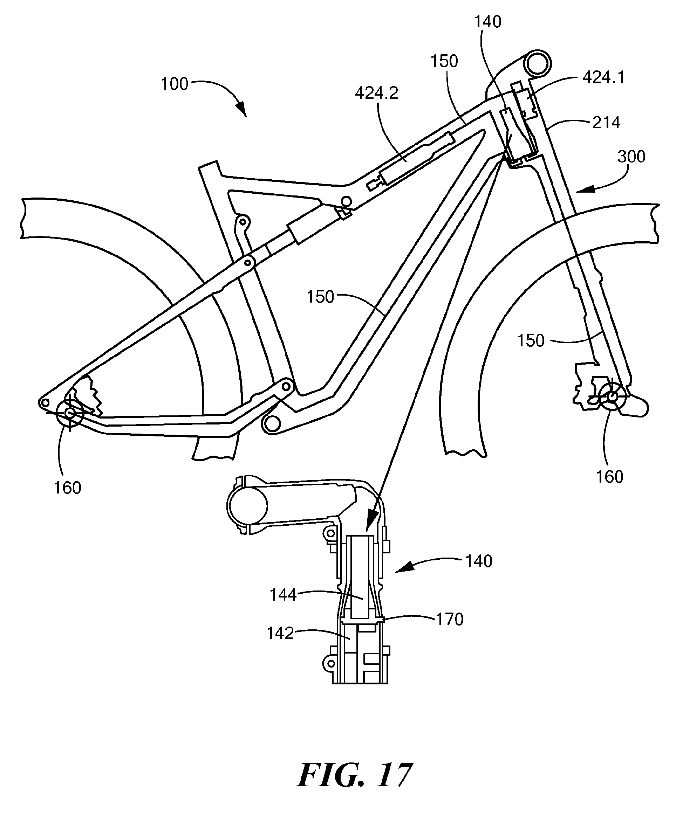

FIG. 17 depicts a portion of the bicycle 100 as illustrated in FIG. 1 now employing two valve assemblies (REMAs) 424.1, 424.2, each one being configured as described herein. In an embodiment, a first REMA 424.1 is disposed in the lefty front tube 214 for controlling the front suspension 300, lefty fork for example, and a second REMA 424.2 is disposed in the top tube 204 for controlling the rear suspension 400, split-shock 410 for example (which has been discussed in much detail above). In an embodiment, an assembly 140 includes a controller 142 and battery 144, which is disposed in the head tube 202 of the bicycle 100, with signal and control wires 150 running through the various tubes of the bicycle frame 200 from various sensors 160 to the controller 142, and from the controller 142 to the valve assemblies 424.1, 424.2 for providing damping control to the bicycle suspension systems 300, 400 as herein described. In an embodiment, the sensors 160 are acceleration sensors, and the controller 142 is a microprocessor based controller that is responsive to executable instructions which when executed by the microprocessor receives signals from the acceleration sensors 160, acts on those signals to determine an open, closed, partially open, partially closed, operational command to be sent to the REMAs 424.1, 424.2, and sends the operational commands to the REMAs 424.1, 424.2, which respond accordingly and in a manner disclosed herein. In an embodiment, a micro-USB port 170 is provided proximate the battery 144 for charging the battery 144, which in an embodiment is a rechargeable battery, and in an embodiment may be non-removable by a user. The response time of any one of the REMAs 424 is such that the associated valve assembly 420, or more specifically the associated lock-out valve 422, opens and allows flow of hydraulic fluid before a rider of the bicycle 100 can perceive that a bump was encountered, where the bump is sensed via sensors 160 disposed on or within the frame 200 for example, and the response time is equal to or less than 50 milliseconds, alternatively equal to or less than 20 milliseconds, alternatively equal to or less than 15 milliseconds, further alternatively within a timeframe between 5 milliseconds and 20 milliseconds, and even further alternatively equal to or less than 5 milliseconds, for example.

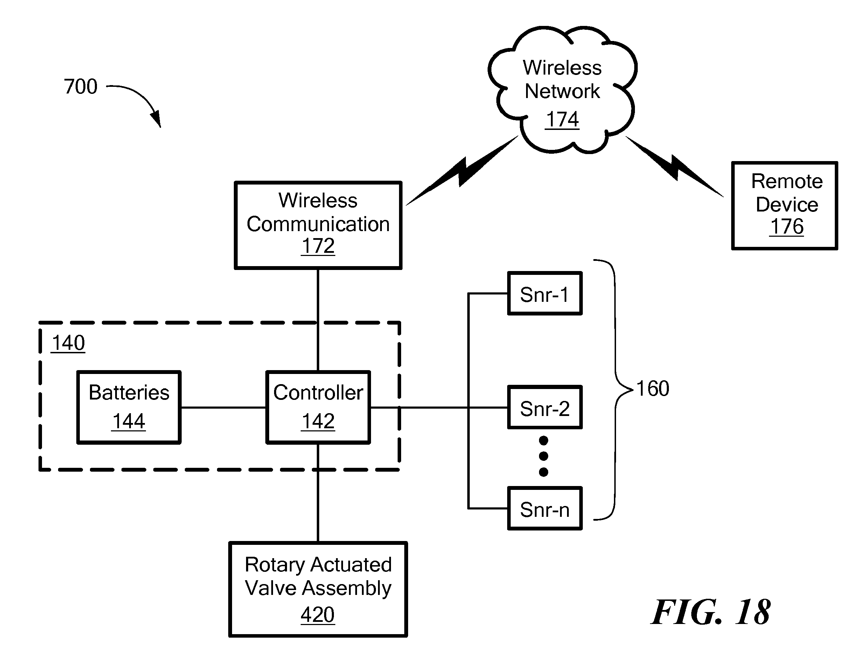

FIG. 18 depicts a schematic of a control system 700 with the above noted elements discussed in connection with FIG. 17, such as the microprocessor based controller 142 disposed to receive power from batteries 144, and disposed in signal communication with a plurality of sensors 160, and the bi-stable rotary actuated valve assembly 420. In addition, however, an embodiment includes a wireless communication card 172 suitable for wireless communication with the controller 142 over a wireless communication path 174 to a remote device 176, such as a mobile phone for example. With such wireless communication, operational parameters of the REMAs 424.1, 424.2 can be adjusted remotely via the remote device 176.

Reference is now made to FIG. 19 (above noted Detail 19) and FIG. 20 (above noted Detail 20) (Detail locations depicted in FIG. 7), which conceptually depict two other areas of the shock absorber 410 depicted in FIG. 7 wherein additional REMAs may be employed. For example, a REMA 424.3 may be disposed in operable communication with the low-speed compression adjuster (see low speed compression knob 602 in FIG. 9 for example) to act on the low-speed compression adjustment needle 604 for adjusting low speed compression response of the shock 410. In an embodiment, the REMA 424.3 could replace the knob 602. And, another REMA 424.4 may be disposed in operable communication with a low-speed rebound adjuster 640 to act on the low-speed rebound adjustment needle 642 (best seen with reference to FIG. 21) for adjusting low speed rebound response of the shock 410.

With reference now to FIG. 21 (above noted Detail 21, location depicted in FIG. 7), an embodiment of the shock absorber 410 includes a pressure sensitive valve 710 ("PSV", "control valve" or "boost valve") disposed on the dynamic piston 720 of the shock absorber 410 (damper) to magnify the effect of the REMA-actuated rotary valve 420. The PSV 710 is designed such that an increase in pressure on the outside of the PSV 710 will cause it to push down against a flow-plate 730, which compresses the air inside a compressible air chamber 732, and which inhibits compression flow 740 through fluid flow paths of the dynamic piston 720. When the rotary valve 420 is closed, the hydraulic pressure increases outside the PSV 710, and thus the effect of the rotary valve 420 is magnified. This has a number of benefits including reduced leakage effects, and reduced operating pressure for the rotary valve 420 for a given flow rate.

With respect to all of the foregoing, in a first arrangement the valve assembly 420 is upstream of the compression assembly (fork or rear shock). The compression assembly is small enough for the offset wires to pass between the compression assembly and the damper housing (fork or rear shock). In this first arrangement a bladder is used for shaft-displacement and thermal compensation (fork or rear shock). In a second arrangement, there could be no compression damping "base valve", and the lockout valve could be just upstream of the shaft-displacement reservoir. This second arrangement could use a bladder for a fork or rear shock, or an IFP for a rear shock. In a third arrangement, a rear shock could have the valve downstream of the compression damping circuit and could use an IFP for shaft-displacement and thermal compensation. For the above mentioned second and third arrangements, rather than the compression assembly being small enough for the offset wires to bypass, a fluid communication port to the IFP may be provided that is made small enough so the offset wires can bypass this fluid communication port and exit the valve housing. The fluid communication port to the IFP would be necessary regardless of whether there is a base valve or not. With regard to a fluid communication port, there is no functional difference between a damper with a base valve upstream of the electronic valve, and a damper with no base valve.

In an embodiment, the housing of the valve assembly 420 may be made of molded plastic, and the electrical wires 432 of the valve assembly 420 that provide power to actuate the REMA 424 may be molded into the molded plastic housing, which provides an advantage of sealing the electrical wires without the need for a separate sealing member.

Regarding the use of a bladder versus an IFP, a fork or shock damper only requires a bladder or an IFP, but not both. The bladder arrangement allows the hydraulic fluid to be routed so that it enters from one end and exits at the other. The bladder arrangement is an annular arrangement that may be more difficult to implement with an IFP. However, an IFP can be annular, but fluid cannot enter from one side of it and exit from the other. While embodiments disclosed herein may be best suited for either a bladder arrangement or an IFP arrangement, the scope of the invention disclosed herein is not limited to just one arrangement or the other, and is intended to encompass both arrangements.

From the foregoing, it will be appreciated that embodiments of the invention may be implemented on front fork or rear shock suspension systems. Typically, a front damper features an externally adjustable low-speed compression adjuster, external low-speed rebound adjuster, and air spring pressure adjuster. As previously mentioned, the front damper can also have any number of other mechanical adjusters (high speed compression, and lockout threshold, for example). In an embodiment, the shock only has low-speed rebound damping and air spring adjustments as mechanical features, as it would be difficult to access an external low-speed compression adjuster with the reservoir hidden in the top tube. However, such access issues may not be present in a front fork that does not utilize a common reservoir with the rear shock, thereby enabling a low speed compression adjuster on the front fork, which is something that cross country race users can appreciate.

An embodiment of the invention may be embodied in the form of computer-implemented processes and apparatuses for practicing those processes. The present invention may also be embodied in the form of a computer program product having computer program code containing instructions embodied in tangible media, such as floppy diskettes, CD-ROMs, hard drives, USB (universal serial bus) drives, or any other computer readable storage medium, such as random access memory (RAM), read only memory (ROM), erasable programmable read only memory (EPROM), electrically erasable programmable read only memory (EEPROM), or flash memory, for example, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein when the computer program code is loaded into and executed by a computer, the computer becomes an apparatus for practicing the invention. When implemented on a general-purpose microprocessor, the computer program code segments configure the microprocessor to create specific logic circuits. A technical effect of the executable instructions is to automatically activate/deactivate a bi-stable rotary actuated valve of a bicycle suspension system to adjust the damping thereof in response to sensor signals indicative of bicycle motion

In an embodiment where the suspension system disclosed herein is connected to an e-bike drive system, the controller may be configured to receive data (e.g.. CAN BUS data) from the e-bike drive system, where such data would be taken into consideration by executable instructions executed by the controller as to how the suspension system is adjusted.

As disclosed, some embodiments of the invention may include some of the following advantages: high speed damping adjustment of a bicycle suspension system at a rapid rate of adjustment that is faster than a rider is capable of perceiving; high speed damping adjustment of a bicycle suspension system capable of reacting to individual bumps in the terrain; and, high speed damping adjustment of a bicycle suspension system capable of relatively low or zero power consumption by using a bi-stable actuator that does not require power to maintain its position in the open and closed positions.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best or only mode contemplated for carrying out this invention, but that the invention will include all embodiments falling within the scope of the appended claims. Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item.

## Claims

1. A valve assembly for a bicycle suspension system, the valve assembly comprising:
a housing configured to house shock absorber fluid;
a rotary valve disposed within the housing;
a rotational electro mechanical actuator (REMA) disposed within the housing in operable communication with the rotary valve; and
wherein the rotary valve and the rotational electro mechanical actuator are each subject to contact with or immersion in the shock absorber fluid in the housing when present.

2. The valve assembly of Claim 1, wherein:
the housing, the rotary valve and the rotational electro mechanical actuator define a plurality of fluid flow passages internal to the housing.

3. The valve assembly of Claim 1, wherein:
the REMA is one of a plurality of REMAs.

4. The valve assembly of Claim 1, wherein:
the rotational electro mechanical actuator is responsive to at least one operational signal from a respective at least one sensor on a bicycle; and
the rotary valve is rotatable between open and closed positions via the rotational electro mechanical actuator being responsive to the operational signals.

5. The valve assembly of Claim 1, wherein:
the rotary valve is lockable in a closed position to provide for a stiff suspension to prevent bicycle "bobbing", and is lockable in an open position to provide for a dampened suspension to provide a smooth ride over rough terrain.

6. The valve assembly of Claim 1, wherein:
the rotational electro mechanical actuator is a bi-stable rotational electro mechanical actuator;
the rotary valve has an open position and a closed position; and
the bi-stable rotational electro mechanical actuator does not receive electrical power to maintain the position of the rotary valve in the open and closed positions.

7. The valve assembly of Claim 4, wherein:
a response time of the rotational electro mechanical actuator to an operational signal from the at least one sensor is equal to or less than about 5 milliseconds.

8. The valve assembly of Claim 1, further comprising:
electrical supply wires disposed in electrical communication with the rotational electro mechanical actuator from a location external of the housing; and
a fluid flow path comprising an annular fluid flow path disposed within the housing and around the rotary valve, the annular fluid flow path having a fluid flow direction parallel to a common assembly axis;
wherein the electrical supply wires are disposed inside the housing and around an outside diameter of the annular fluid flow path in an axial direction.

9. The valve assembly of Claim 8, further comprising:
a compression damping assembly disposed, configured and sized so as to fit within the fluid flow path.

10. The valve assembly of Claim 1, further comprising:
electrical supply wires disposed in electrical communication with the rotational electro mechanical actuator from a location external of the housing; and
a compression damping assembly configured and disposed within the housing such that the electrical supply wires to the rotational electro mechanical actuator are disposed inside the housing and around an outside diameter of the compression damping assembly in an axial direction.

11. The valve assembly of Claim 4, wherein:
the rotational electro mechanical actuator is responsive to at least one operational signal from a respective at least one sensor on a bicycle via a microprocessor based controller disposed locally on the bicycle; and
the controller is responsive to executable instructions which when executed by the controller facilitates a rapid change in a state of the rotary valve via the rotational electro mechanical actuator based at least in part on a movement of the bicycle.

12. The valve assembly of Claim 11, wherein:
the rapid change in a state of the rotary valve occurs in less than or equal to 15 milliseconds.

13. The valve assembly of Claim 4, wherein:
the at least one sensor comprises one or more of: an acceleration sensor; a brake-activation sensor; a hydraulic fluid temperature sensor; an ambient temperature sensor; a pressure sensor; a weight sensor; a strain gage sensor; an ambient air pressure sensor; a speed sensor; an inclination sensor; and, a free-fall sensor.

14. The valve assembly of Claim 13, wherein:
the hydraulic fluid temperature sensor is employed to sense fade of the hydraulic fluid and to facilitate a change in a damping rate of the bicycle suspension system.

15. The valve assembly of Claim 1, further comprising:
a flexible element disposed within the housing and disposed coaxially surrounding or partially surrounding the rotary valve to define an annular fluid flow path, the annular fluid flow path having a fluid flow direction parallel to a common assembly axis.

16. The valve assembly of Claim 15, wherein:
during a compression event oil flows into a first end of the flexible element, and during a rebound event oil flows out of a second end of the flexible element.

17. The valve assembly of Claim 1, wherein:
the rotary valve comprises a rotary spool portion disposed in rotational arrangement with a wall portion of the housing; and
at least one bearing disposed between the rotary spool portion and the wall portion.

18. The valve assembly of Claim 1, further comprising:
electrical supply wires disposed in electrical communication with the rotational electro mechanical actuator from a location external of the housing;
wherein the housing is made out of molded plastic; and
wherein the electrical supply wires are molded into the housing.

19. The valve assembly of Claim 11, wherein:
the controller comprises a wireless communication device configured and disposed to enable a user to adjust an adjustable control setting of the valve assembly via a remote wireless device.

20. The valve assembly of Claim 1, further comprising:
a shock absorber disposed in fluid communication with the valve assembly, the shock absorber comprising a dynamic piston disposed in operable communication with a damper shaft, the dynamic piston comprising a pressure sensitive valve disposed and configured to magnify a damping effect of the valve assembly.
